# EUROPEAN PATENT APPLICATION

(11) **EP 2 202 406 A2**
(43) Date of publication of application: **30.06.2010**
(21) Application number: 09178258.1
(22) Date of filing: 08.12.2009
(51) Int. Cl.: F03D 11/00, F03D 7/02, F03D 7/04

(54) **Wind turbine with GPS load control**

(30) Priority: 23.12.2008 US 342126
(71) Applicant: General Electric Company, Schenectady, NY 12345 (US)
(72) Inventor: Benito, Pedro L., 48429, Rheine (DE); Yegro, Eugenio, 28979, Madrid (ES)
(74) Representative: Bedford, Grant Richard

(57) **Abstract**

A wind turbine (2) includes at least one global positioning sensor (22) for determining a deflection of a component of the wind turbine (2).

## Description

The subject matter described here generally relates to wind turbines, and, more particularly, to wind turbine load control using global positioning systems.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

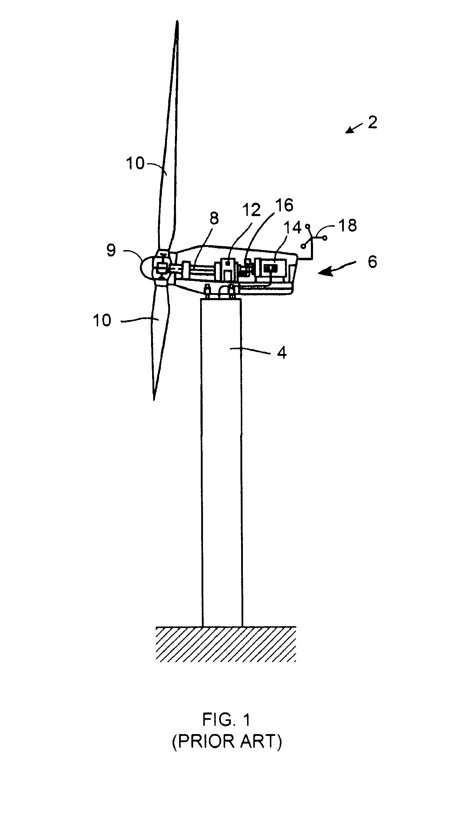

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a hub 9 to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that receives input from an anemometer 18. For example, as disclosed in commonly-owned U.S. Patent Application Serial No. 10/554610 filed on October 26, 2005 (Attorney Docket No. 133330, published as International Patent Publication No. WO2004111443), the control system 16 may include a shut down control unit for shutting down the rotor, and receiving unit for operatively connected to the shut down control unit for receiving a remote shutdown command signal.

Wind turbines are subject to fluctuating forces which may cause deflections in various components. For example, depending upon the height, wall thickness, and weight of the nacelle and rotor, a typical steel wind turbine tower 4 might oscillate back and forth at a natural frequency of roughly one cycle every three seconds. Each time a blade 10 passes in front of the tower 4, the wind will push slightly less against the tower. If the rotor spins at a speed such that a blade 10 passes the tower 4 each time the top of the tower is at its maximum displacement, then the passing blade 10 may either dampen or amplify (reinforce) the oscillations of the tower. Furthermore, since the blades 10 are also somewhat flexible, they too can vibrate at a typical natural frequency of around one cycle per second, or Hertz. These and other components of the wind turbine 2 that significantly bend or deflect as a result of those and/or other forces may eventually develop cracks that can lead to catastrophic failures.

These and other drawbacks associated with such conventional approaches are addressed here in by providing, in various embodiments, a wind turbine comprising at least one global positioning sensor for determining a deflection of a component of the wind turbine.

Various aspects of this technology will now be described with reference to the following figures ("FIGs.") which are not necessarily drawn to scale, but use the same reference numerals to designate corresponding parts throughout each of the several views, and in which:
FIG. 1 is a schematic side view of a conventional wind generator.
FIG. 2 is a schematic side view of a wind generator.
FIG. 3 is a schematic side view of a wind turbine blade for use with the wind generator shown in FIG. 2.
FIG. 4 is a schematic diagram of a position sensor for use with the wind generator

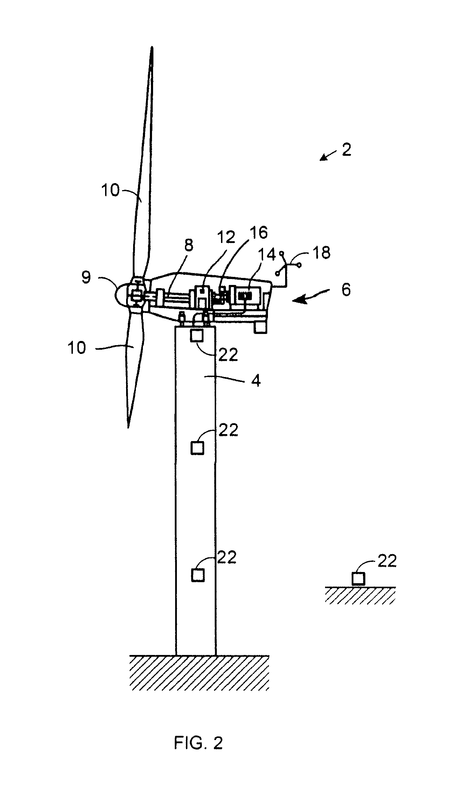

FIGs. 2 is schematic side view of the wind turbine 2 from FIG. 1 having several position sensors 22. However, the technology describe here may also be used with any other wind turbine.

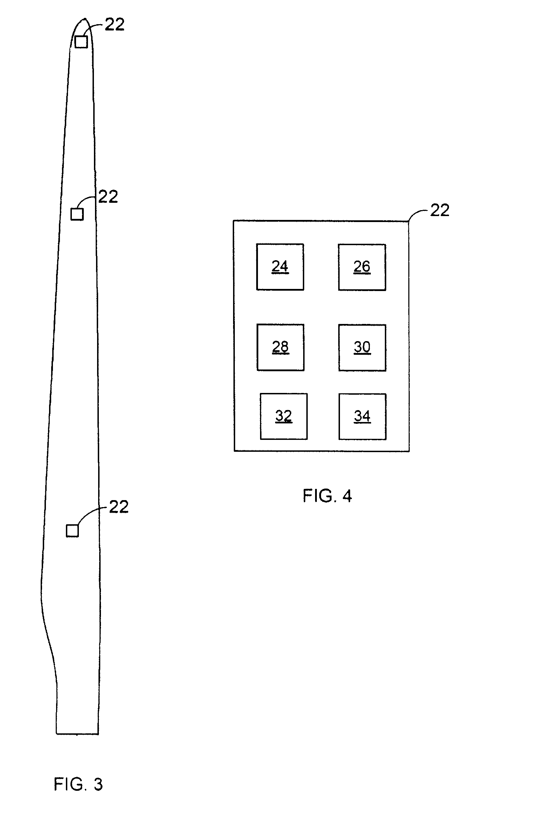

Some or all of the position sensors 22 may be arranged at various locations around the wind turbine 2, including but not limited to those illustrated here, for determining a deflection of a component of the wind turbine. For example, the position sensors 22 may be arranged on various stationary or moving components of the wind turbine 2 that bend, vibrate, or otherwise deflect during operation of the turbine 2, including, but not limited to, the tower 4, nacelle 6, hub 9, and/or blades 10. The position sensors 22 may be arranged at any location, including the points of expected maximum displacement of each component. For example, as illustrated in FIG. 3, the position sensors 22 may be arranged on any or all of the blades 10 at the span positions corresponding to the location of maximum deformation expected in the first, second, and/or third flapwise and/or edgewise vibrational modes.

One or more of the position sensors 22 may include, but is not limited to, a global position sensor for determining vertical and/or horizontal position (in one-, two-, or three-dimensional space) using the Global Positioning System of global navigation satellites, including any of the various augmentation systems, such as Assisted GPS, Differential GPS (e.g., OmiSTAR, StarFire, DGPS, NDGPS), Inertial Navigation Systems, Wide Area Augmentation System, Satellite Band Augmentation System, European Geostationary Navigation Overlay Service, and/or Multi Satellite Augmentation System. For example, the Hemisphere GPS "LX-1" L-band option board claims to provide sub-meter accuracy for OmniSTAR subscribers when combined their Crescent GPS board. In order to improve the accuracy of the global position sensors 22, the sensors may be configured so that the same set of satellites is used for all sensors. As illustrated in FIG. 2, one or more reference global positioning sensors 22 may be arranged at any fixed position (such as the illustrated ground) and used to correct and/or compensate the readings from the other sensors 22 arranged on the wind turbine 2. For example, those corrections may be made in the control system 16 and/or at another specifically dedicated controller.

As illustrated in FIG. 4, each of the global position sensors 22 may be configured as a transponder including, for example, a GPS receiver 24, a wireless emitter and/or receiver 26, and a power supply 28. For example, the power supply 28 may be battery operated and/or connected to the wind turbine electrical system. A microgenerator, such as a piezoelectric microgenerator, may also be provided in order to extract energy from the movement of the global position sensor 22 at a non-stationary location such as on the blades 10. Lightning protection, such as Faraday cages and/or grounding, may also be provided. In various embodiments, the global position sensor 22 can be mounted in a register box for easy access and maintenance, or, for locations that are difficult to access, redundant sensors can be provided.

The global positioning sensor 22 may also include an accelerometer 30 and/or a control unit 32. For example, the accelerometer 30 may be a biaxial or triaxial accelerometer and the control unit 32 may include a filter 34 for processing the signal coming from the GPS receiver 24 and/or the accelerometer 30. The control unit 32 may be arranged to calculate the position, velocity, and acceleration before sending these and/or other data to the turbine control system 16. The control system 16 will then process that data by calculating, for example, rotor azimuth, fore-aft acceleration and velocity at the top of tower 4, side to side acceleration and velocity top of tower 4, deflection and direction of the deflection of the top of tower 4, and/ or deflection at various positions of each blade of the blades 10. Shear factor and turbulence level may also be determined. The control system 16 will then controlling the operation of the wind turbine 2 in response to a signal from the global positioning sensor 22.

The turbine control unit 16 uses that deflection information to calculate (using, for example, Fuzzy logic) the loads on the drive train 8, tower 4, and/or blades 10. For example, software may be embedded in the control system 16 to model various components of the wind turbine 2 including, but not limited to the tower 4, blades 10, driver train 8, and/or and others, in the form of look-up tables, polynomial transfer functions and/or physics-based transfer functions. Those models may also be configured in order to account for numerous variables such as GPS time delay, positioning error, and manufacturing variances such as blade weight.

In this way, the position, stress, velocity, and/or acceleration of any part of a wind turbine 2 can be calculated from the GPS receiver 24 signal, the accelerometer 30 signal (using inertial calculations), or a combination thereof. For example, the geometrical center of the tower or a fix point nearby the turbine may be equipped with a GPS sensor and located in a way that receives the satellites signals. The control system 16 then compares these measured parameters with design parameters in order to control and operate the turbine, e.g. shutting down the turbine 2 when those sensed parameters exceed threshold values. The control system 16 may also be arranged with a fatigue model for each component that will control the operation of the turbine 2 based upon the "consumed fatigue" of the element.

Various control strategies may be used. For example, the operation of the wind turbine 2 may change from one control state to another depending on the wind conditions and/or failure of a position sensor 22. The turbine 2 may be kept in a control state for at least during 10 minutes, unless a failure or overload situation appears. Wind speed may then be calculated from tower deflection and/or rotational speed and pitch angle of the blades 10. Wind direction may also be determined from the direction of the tower deflection direction, eliminating the need of a wind vane. Similarly, the tilt angle of the turbine 2 may be adjusted according to a calculated shear factor if the wind turbine has a tiltable nacelle 6. The pitch angle and/or rotor azimuth angle of each blade 10 may also be adjusted according to wind speed, wind shear, and turbulence level in order to provide low noise operation. The pitch of each blade 10 may further be adjusted individually in order to reduce the side to side vibration level of the tower 4. Wind turbines 2 that are connected to a central wind farm control may be controlled so as to optimize production of the entire farm while reducing wake effects of one turbine on other, such as by reducing the rotational speed of a particular wind turbine, and adapt to the utility time dependant requirements.

Alternatively, or in addition, one, two, or more of those position sensors 22 may be used for determining a position indicative of a yaw bearing of the wind turbine. For example, a single position sensor 22 arranged in nacelle 6 or hub 9 may be used to indicate a point position (such as longitude and latitude) on an arc traced by the sensor as it moves with the yaw of the turbine 2. The yaw bearing of the wind turbine 2 may then be deduced from the position of that single sensor 22 relative to the substantially fixed center of rotation of the turbine 2.

Two or more of the position sensors 22 may also be used for determining a line position indicative of a yaw bearing, or any other bearing, of the wind turbine 2. For example, two or more of the sensors 22 arranged near the front or back of the nacelle 6 may be used to determine a line position corresponding to the axis of the drive train 28. Alternatively, or in addition, two or more sensors 22 arranged near tips of the blades 10 may be used to determine a line position that is perpendicular to the axis of the drive train 8, such as the horizontal rotor plane axis and/or the vertical rotor plane axis. Standard geometric and/or trigonometric transformations may be used to correlate these line positions with a particular axis of the wind turbine 2.

The technology describe above offers a various advantages over conventional approaches. For example, it provides detailed deflection information that can be used to estimated loading and control the wind turbine 2.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention are defined by the following numbered clauses:
1. A wind turbine, comprising at least one global positioning sensor for determining a deflection of a component of the wind turbine.
2. The wind turbine recited in clause 1 wherein the at least one global positioning sensor comprises a receiver, a wireless emitter, and a power supply.
3. The wind turbine recited in any preceding clause wherein the at least one global positioning sensor further comprises an accelerometer.
4. The wind turbine recited in any preceding clause wherein the component of the wind turbine comprises at least one of the group consisting of a blade, a hub, a nacelle, and a tower of the wind turbine.
5. The wind turbine recited in any preceding clause wherein the component of the wind turbine comprises a blade of the wind turbine.
6. The wind turbine recited in any preceding clause wherein the component of the wind turbine comprises a tower of the wind turbine.
7. The wind turbine recited in any preceding clause wherein the at least one global positioning sensor is arranged at a location on the blade corresponding to near where maximum vibrational displacement occurs.
8. The wind turbine recited in any preceding clause wherein the at least one global positioning sensor is arranged near a tip of the blade.
9. The wind turbine recited in any preceding clause wherein the at least one global positioning sensor is arranged at a location near a top of the tower.
10. A wind turbine, comprising:
   a tower;
   a nacelle arranged on the tower for supporting a drive train;
   a hub arranged at one end of the drive train
   a blade arranged on the hub for rotating the drive train; and
   a global positioning sensor arranged on one of the tower and blade for determining a deflection of the one of the tower and blade.
11. The wind turbine recited in any preceding clause wherein the global positioning sensor comprises a receiver and a power supply.
12. The wind turbine recited in any preceding clause wherein the global positioning sensor further comprises a wireless emitter.
13. The wind turbine recited in any preceding clause wherein the global positioning sensor further comprises an accelerometer.
14. The wind turbine recited in any preceding clause wherein the global positioning sensor further comprises an accelerometer.
15. The wind turbine recited in any preceding clause further comprising a control system for controlling the turbine in response to a signal from the global positioning sensor.
16. The wind turbine recited in any preceding clause further comprising a control system for controlling the turbine in response to a signal from the global positioning sensor.
17. The wind turbine recited in any preceding clause further comprising a control system for controlling the turbine in response to a signal from the global positioning sensor.
18. The wind turbine recited in any preceding clause further comprising a control system for controlling the turbine in response to a signal from the global positioning sensor.
19. The wind turbine recited in any preceding clause, further comprising a reference global positioning sensor arranged at a fixed position for compensating a reading from the at least one global positioning sensor.
20. The wind turbine recited in any preceding clause further comprising a reference global positioning sensor arranged at a fixed position for compensating a reading from the global positioning sensor.

## Claims

1. A wind turbine (2), comprising at least one global positioning sensor (22) for determining a deflection of a component of the wind turbine.

2. The wind turbine recited in claim 1 wherein the at least one global positioning sensor (22) comprises a receiver (24), a wireless emitter (26), and a power supply (28).

3. The wind turbine recited in claim 2 wherein the at least one global positioning sensor (22) further comprises an accelerometer (30).

4. The wind turbine recited in any preceding claim wherein the component of the wind turbine comprises at least one of the group consisting of a blade (10), a hub (9), a nacelle (6), and a tower (4) of the wind turbine (2).

5. The wind turbine recited in any preceding claim wherein the component of the wind turbine comprises a blade (10) of the wind turbine (2).

6. The wind turbine recited in any preceding claim wherein the component of the wind turbine comprises a tower (40) of the wind turbine (2).

7. The wind turbine recited in any preceding claim wherein the at least one global positioning sensor (22) is arranged at a location on the blade (10) corresponding to near where maximum vibrational displacement occurs.

8. The wind turbine recited in any preceding claim wherein the at least one global positioning sensor (22) is arranged near a tip of the blade (10).

9. The wind turbine recited in any preceding claim wherein the at least one global positioning sensor (22) is arranged at a location near a top of the tower (4).

10. A wind turbine (2), comprising:
a tower (4);
a nacelle (6) arranged on the tower (4) for supporting a drive train (8);
a hub (9) arranged at one end of the drive train (8);
a blade (10) arranged on the hub (9) for rotating the drive train (8); and
a global positioning sensor (22) arranged on one of the tower (4) and blade (10) for determining a deflection of the one of the tower (4) and blade (10).

11. The wind turbine recited in claim 10 wherein the global positioning sensor (22) comprises a receiver (24) and a power supply (28).

12. The wind turbine recited in claim 10 or 11 wherein the global positioning sensor (22) further comprises a wireless emitter (26).

13. The wind turbine recited in any of claims 10, 11, or 12 wherein the global positioning sensor further (22) comprises an accelerometer (30).

14. The wind turbine recited in any of claims 10-14 further comprising a control system (32) for controlling the turbine (2) in response to a signal from the global positioning sensor (22).

15. The wind turbine recited in any of claims 1-15, further comprising a reference global positioning sensor arranged at a fixed position for compensating a reading from the at least one global positioning sensor (22).
